# EUROPEAN PATENT APPLICATION

(11) **EP 1 675 332 A1**
(43) Date of publication of application: **28.06.2006**
(21) Application number: 05257714.5
(22) Date of filing: 15.12.2005
(51) Int. Cl.: H04L 12/58

(54) **Anti-spam server**

(30) Priority: 21.12.2004 US 18893
(71) Applicant: LUCENT TECHNOLOGIES INC., Murray Hill, New Jersey 07974-0636 (US)
(72) Inventor: Qutub, Shehryar S., Hoffmann Estates, Illinois 60194 (US); Cai, Yigang, Naperville, Illinois 60565 (US); Sharma, Alok, Lisle, Illinois 60532 (US)
(74) Representative: Sarup, David Alexander

(57) **Abstract**

A method and apparatus for blocking unwanted messages (spam) in a telecommunications network. Nodes for offering all types of telecommunications services are connected to a centralized anti-spam server. In response to reception of a message request, a node of the network transmits information about the request to the centralized server to obtain permission to transmit the request or an indication that the message should be blocked. Advantageously, a centralized server stores data for all types of network elements thus providing a centralized system for analyzing spam requests from and to all types of network elements.

## Description

### Technical Field

This invention relates to a server for blocking unwanted messages (spam) in a telecommunications network.

### Background of the Invention

With the advent of the Internet, it has become easy to send messages to a large number of destinations at little or no cost to the sender. The messages include the short messages of short message service. These messages include unsolicited and unwanted messages (spam) which are a nuisance to the receiver of the message who has to clear the message and determine whether it is of any importance. Further, they are a nuisance to the carrier of the telecommunications network used for transmitting the message, not only because they present a customer relations problem with respect to irate customers who are flooded with spam, but also because these messages, for which there is usually little or no revenue, use network resources. An illustration of the seriousness of this problem is given by the following two statistics. In China in 2003, two trillion short message service (SMS) messages were sent over the Chinese telecommunications network; of these messages, an estimated three quarters were spam messages. The second statistics is that in the United States an estimated 85-90% of e-mail messages are spam.

A number of arrangements have been proposed and many implemented for cutting down on the number of delivered spam messages. Various arrangements have been proposed for analyzing messages prior to delivering them. According to one arrangement, if the calling party is not one of a pre-selected group specified by the called party, the message is blocked. Spam messages can also be intercepted by permitting a called party to specify that no messages destined for more than N destinations are to be delivered.

A called party can refuse to publicize his/her telephone number or e-mail address. In addition to the obvious disadvantages of not allowing callers to look up the telephone number or e-mail address of the called party, such arrangements are likely to be ineffective. An unlisted e-mail address can be detected by a sophisticated hacker from the IP network, for example, by monitoring message headers at a router. An unlisted called number simply invites the caller to send messages to all 10,000 telephone numbers of an office code; as mentioned above, this is very easy with present arrangements for sending messages to a plurality of destinations.

A problem of the prior art therefore is there is no totally effective way of intercepting spam messages. While there have been many improvements in recent years in the techniques used to block spam messages, there remains considerable imperfections in the present arrangements.

### Summary of the Invention

Applicants have studied the present arrangement for intercepting spam messages and have concluded that a major problem is the lack of centralization of spam intercept systems especially for those cases in which two or more types of services are involved such as mobile systems and e-mail, or for cases in which separate and independent spam filters cannot detect the total effect of mass spam transmissions. Under those circumstances, an anti-spam system tends to be tied to one of the services or to a portion of a network, and cannot take advantage of the additional information associated with both or more of the involved systems. Applicants have found a way of improving anti-spam performance through the use of a centralized anti-spam server for serving all types of traffic and all traffic of a carrier. The centralized anti-spam server can, for example, maintain black lists and white lists of all types of source terminals for each destination terminal in the carrier's network. This is a major improvement over prior art anti-spam services which are either standalone for a subnetwork or integrated with other server functions. In accordance with Applicants' invention, a centralized anti-spam server serves the anti-spam function using a centralized database and rule engine for all network nodes in wireless, wire-line, broadband, or Internet protocol networks. Subscriber-based black/white lists permit the subscriber to have control and screen messages from unwanted originators independent of the type of originator. Network-based black and white lists can be used for controlling traffic from other networks.

The centralized server can be accessed by any network node. The inquiry message to the anti-spam server can include originating/terminating address information, message type (SMS, MMS, e-mail) and content type (text, audio clips, audio streams), content text of message to be screened, date and time screening. The response message from the anti-spam server can include black/white list check results and rule/criteria raw data. The centralized server can distribute the spam screen rule and filtering criteria to each of the network nodes, and rule engine execution recommendations (if a network node needs to identify whether the received message is spam, it may send a query message to the centralized server). The query message contains basic information such as calling/called party address, network ID, message type, content type, etc. The centralized server uses the information to execute a rule engine which resides in the centralized server. The rule engine output is whether this message is a spam and how to handle it. The centralized anti-spam server can be provisioned with data for tables and rules from network operators and client servers. The rule engine can have many rule sets stored in the database. Those rule sets can be configured through operator administration from a provision desk, or through a remote client terminal connected to subscribers with secure accessing.

The centralized anti-spam server can distribute anti-spam data/rules to any network element if the network element has anti-spam capability and a rule engine, but the network operator prefers to configure a rule set at a centralized place, such as the centralized anti-spam server so it can distribute to all elements. For example, a black list provisioned at the centralized server can then be distributed to SMSC, MMSC, e-mail server. Centralized provisioning of anti-spam rules minimizes inadvertent discrepancies that may occur if each network node is provisioned independently. It also ensures that any updates to rules are reflected consistently across a set of distributed network nodes.

### Brief Description of the Drawing(s)

FIG. 1 is a block diagram of a telecommunications network including an anti-spam centralized server;
FIG. 2 is a flow diagram illustrating the method of Applicants' invention; and
FIG. 3 is a block diagram of an anti-spam Centralized Server.

### Detailed Description

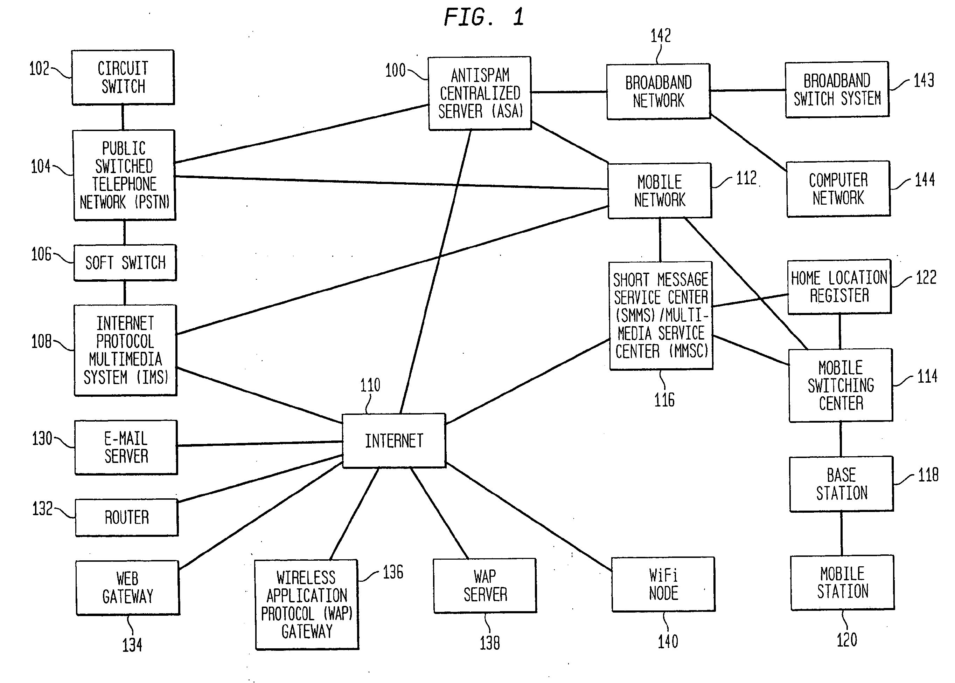

FIG. 1 is a block diagram of a telecommunications network including an anti-spam centralized server 100. The server is connected via the Internet 110, the public switched telephone network 104, the public mobile network 112, and the public broadband network 142. The broadband network is connected to the Internet 110, a computer network 144, and a broadband switching system 143. The public switched telephone network is connected to a circuit switch 102 which in turn is connected to land-line telecommunication terminals (not shown). The public switched telephone network is connected via a soft switch 106 for implementing Voice Over IP to an Internet Protocol multimedia subsystem (IMS) 108. The IMS 108 is connected to the Internet 110 and to the public mobile network 112. The Internet 110 is connected to an e-mail server 130 and to a router 132. The router receives instructions from the IP network 110 to establish connections through the Internet. The Internet is also connected to a web gateway 134, a Wireless Application Protocol (WAP) gateway 136, a WAP server 138, and a WiFi node 140 (Wireless Local Access Network (WLAN)). The mobile network is connected to a short message service center/Multimedia Message Service Center (SMSC/MMSC) 116 which in turn is connected to the Internet and to a mobile switching center (MSC) 114. The MSC is connected to a base station to base stations 118 which in turn serve mobile terminals 120. The MSC and SMSC access a home location register 122 to find the location of the mobile stations which it serves. A Home Location Register (HLR) is connected to the SMSC/MMSC, an MSC and the Mobile Network to provide subscriber location information.

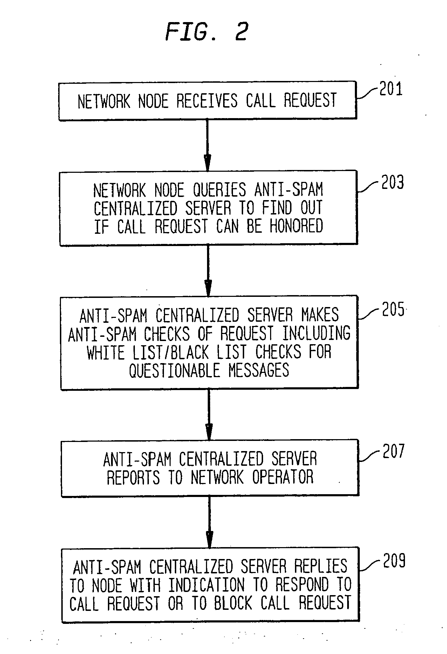

FIG. 2 illustrates the operation of Applicants' invention. A node in the network receives a call request (action block 201). The node sends a request to the anti-spam centralized server to check whether the call request should be blocked or honored 205. The anti-spam server analyzes the request 207. If the request is for a type of message which should be reported to the network operator, the message is reported to the network operator at an operations support center (action block 207). The anti-spam centralized server responds to the requesting node with an indication of whether the call request should be honored or blocked (action block 209).

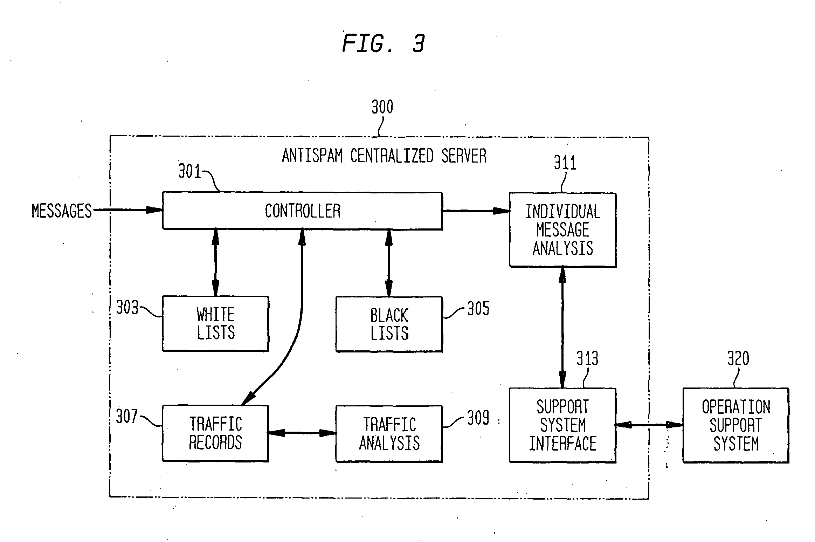

FIG. 3 is a block diagram of an Anti-Spam Centralized Server 300 which serves the entire series of networks shown in FIG. 1. Messages are received in a controller 301. The controller accesses Black Lists 305 and White Lists 303 to test if the messages can be immediately blocked or immediately passed. The controller also updates traffic records 307 which are subject to traffic analysis 309 to test whether any traffic thresholds are being violated. Individual message content is analyzed by Individual Message Analysis 311, and if necessary, newly discovered spam is sent via a support system interface 313 to an operations support system 320 for further analysis.

The above description is of one preferred embodiment of Applicants' invention. Other embodiments will be apparent to those of ordinary skill in the art without departing from the scope of the invention. The invention is limited only by the attached claims.

## Claims

1. A method of blocking unwanted messages (spam) in a telecommunication network comprising the steps of:
receiving a request to transmit a message from a source to a destination;
transmitting a source and a destination of that request to a centralized anti-spam server;
in said centralized anti-spam server, determining whether the message request can be honored by transmitting the message from the source to the destination or whether the message transmission should be blocked.

2. The method of claim 1 wherein said centralized anti-spam server serves a plurality of networks.

3. The method of claim 1 wherein said centralized anti-spam server comprises storage for black lists of connections over which messages are not to be transmitted.

4. The method of claim 1 wherein said centralized anti-spam server comprises storage for identifying connections over which messages can be transmitted.

5. The method of claim 1 further comprising the step of:
transmitting message type information and header information to said centralized anti-spam server for use by said centralized anti-spam server in identifying spam messages.

6. The method of claim 1 further comprising the steps of:
transmitting at least part of a text of said message to said anti-spam server; and
using the text to aid in the determination of whether transmission of said message should be allowed or denied.

7. Apparatus for blocking unwanted messages (spam) in a telecommunication network comprising:
means for receiving a request to transmit a message from a source to a destination;
means for transmitting a source and a destination of that request to said centralized anti-spam server;
in said centralized anti-spam server, means for determining whether the message request can be honored by transmitting the message from the source to the destination or whether the message transmission should be blocked.

8. The apparatus of claim 7 wherein said centralized anti-spam server serves a plurality of networks.

9. The apparatus of claim 7 further comprising:
means for transmitting message type information and header information to said centralized anti-spam server for use by said centralized anti-spam server in identifying spam messages.

10. The apparatus of claim 7 further comprising:
means for transmitting at least part of a text of said message to said anti-spam server; and
means for using the text to aid in the determination of whether transmission of said message should be allowed or denied.
